(19) Europäisches Patentamt
European Patent Office
Office européen des brevets

(11) Veröffentlichungsnummer: **0 496 119 A1**

# (12) EUROPÄISCHE PATENTANMELDUNG

(21) Anmeldenummer: **91122344.4**

(22) Anmeldetag: **28.12.91**

(51) Int. Cl.5: **C08L 71/12**, C08L 25/02, C08L 51/04, C08K 5/00, //(C08K5/00,5:43,5:49)

(30) Priorität: **23.01.91 DE 4101805**

(43) Veröffentlichungstag der Anmeldung: **29.07.92 Patentblatt 92/31**

(84) Benannte Vertragsstaaten: **BE DE ES FR GB NL**

(71) Anmelder: **BASF Aktiengesellschaft**
**Carl-Bosch-Strasse 38**
**W-6700 Ludwigshafen(DE)**

(72) Erfinder: **Seelert, Stefan, Dr.**
**Albrecht-Duerer-Ring 23 a**
**W-6710 Frankenthal(DE)**
Erfinder: **Klaerner, Peter, Dr.**
**Hauptstrasse 62**
**W-6719 Battenberg(DE)**
Erfinder: **Vestner, Siegfried, Dr.**
**Sudermannstasse 4**
**W-6700 Ludwigshafen(DE)**

## (54) Flammgeschützte thermoplastische Formmassen mit erhöhter Fliessfähigkeit.

(57) Flammgeschützte thermoplastische Formmassen, enthaltend
A) 5 bis 93,9 Gew.-% eines Polyphenylenethers
B) 5 bis 93,9 Gew.-% eines vinylaromatischen Polymeren
C) 0,1 bis 20 Gew.-% eines aromatischen Sulfonamids
D) 1 bis 30 Gew.-% eines phosphorhaltigen Flammschutzmittels
und
E) 0 bis 60 Gew.-% sonstiger Zusatzstoffe in wirksamen Mengen.

EP 0 496 119 A1

Die Erfindung betrifft flammgeschützte thermoplastische Formmassen, enthaltend

A) 5 bis 93,9 Gew.-% eines Polyphenylenethers

B) 5 bis 93,9 Gew.-% eines vinylaromatischen Polymeren

c) 0,1 bis 20 Gew.-% eines aromatischen Sulfonamids

D) 1 bis 30 Gew.-% eines phosphorhaltigen Flammschutzmittels

und

E) 0 bis 60 Gew.-% sonstiger Zusatzstoffe in wirksamen Mengen.

Darüberhinaus betrifft die Erfindung die Verwendung derartiger flammgeschützter Formmassen zur Herstellung von Fasern, Folien und Formkörpern und die aus den erfindungsgemäßen Formmassen erhältlichen Formkörper.

Flammgeschützte thermoplastische Formmassen auf der Grundlage von Polyphenylenethern (PPE) und Styrolpolymerisaten sind an sich bekannt und eignen sich zur Herstellung von Formteilen, die sich im Vergleich zu schlagzäh modifizierten Styrolpolymerisaten, die nicht mit Polyphenylenether abgemischt sind, durch eine bessere Wärmeformbeständigkeit auszeichnen. Die Materialeigenschaften derartiger Formteile sind im allgemeinen zufriedenstellend, doch haben diese Polymermischungen für einige Anwendungen eine unbefriedigende Fließfähigkeit oder, bei verbesserter Fließfähigkeit, eine verminderte Wärmeformbeständigkeit.

Die Zugabe von aromatischem Sulfonamid zu Homopolystyrol (Standardpolystyrol) ist bekannt. In der DE-PS 29 23 610 wird ein Verfahren zur Herstellung geschäumter Polystyrolplatten aus mit einem Fließfähigkeitsverbesserer vermischten Homopolystyrol beschrieben. Als Fließfähigkeitsverbesserer wird unter anderem p-Toluolsulfonamid eingesetzt.

Benzolsulfonamid wird von C.I. Chung et al., J. Appl. Polym. Sci. 37 (1989), 1339, als Schmiermittel für Homopolystyrol vorgeschlagen.

Schlagfest modifiziertes Polystyrol wird durch die Zugabe von aromatischen Sulfonamiden ebenfalls in der Fließfähigkeit verbessert. Ein Nachteil liegt in der deutlichen Herabsetzung der Wärmeformbeständigkeit.

Der Zusatz von o,p-Toluolsulfonamiden zu thermoplastischen Formmassen auf der Grundlage von Polyphenylenether und Styrolpolymerisaten ist ebenfalls bekannt. So werden in der DE-OS 26 59 331 u.a. o,p-Toluolsulfonamide als Flexibilisierungsmittel eingesetzt. Auch in Mischungen aus Polyphenylenether und Styrolpolymerisaten wird die Wärmeformbeständigkeit herabgesetzt. In der DE-OS 26 59 304 werden u.a. o,p-Toluolsulfonamide zur Verringerung der Schmelztemperatur eingesetzt.

Der vorliegenden Erfindung lag daher die Aufgabe zugrunde, thermoplastische Formmassen zur Verfügung zu stellen, die eine verbesserte Fließfähigkeit bei gleichbleibender Wärmeformbeständigkeit aufweisen sowie eine verbesserte multiaxiale Schlagzähigkeit aufweisen.

Demgemäß wurden die eingangs definierten thermoplastischen Formmassen gefunden.

Bevorzugte Massen dieser Art und deren Verwendung sind den Unteransprüchen zu entnehmen.

Überraschenderweise wurde nun gefunden, daß durch die Zugabe von aromatischen Sulfonamiden zu Polymermischungen aus schlagfest modifizierten Styrolpolymerisaten und Polyphenylenether, die mit phosphorhaltigen Flammschutzmitteln flammwidrig ausgerüstet sind, nicht nur die Fließfähigkeit verbessert wird, sondern auch die Wärmeformbeständigkeit nur unwesentlich abnimmt. Gleichzeitig verbessern die aromatischen Sulfonamide die multiaxiale Zähigkeit der Polymermischungen. Weiterhin wurde gefunden, daß aromatische Sulfonamide in diesen Mischungen einen den Brandschutz verbessernden Einfluß haben und die mittleren Brandzeiten der Polymermischungen verkürzen.

Die in den erfindungsgemäßen Formmassen enthaltenen Polyphenylenether A) sind an sich bekannt. Die Polyphenylenether A) sind in den erfindungsgemäßen Formmassen in Mengen von 5 bis 93,9, bevorzugt 5 bis 50 und insbesondere 5 bis 40 Gew.-% enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether),Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether), Poly(2,6-dibenzyl-1,4-phenylenether), Poly(2-ethoxi-1,4-phenylenether), Poly(2-chlor-1,4-phenylenether), poly(2,5-dibrom-1,4-phenylenether).Bevorzugt werden Polyphenylenether eingesetzt, bei denen die Substituenten Alkylreste mit 1 bis 4 Kohlenstoffatomen sind, wie Poly-(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,2 bis 0,7 dl/g, gemessen in Choroform bei 25°C, aufweisen. Dies entspricht einem mittleren Molekulargewicht $\overline{M}_w$ (Gewichtsmittel) von 10 000 bis 70 000.

Bevorzugt werden in den erfindungsgemäßen Formmassen Polyphenylenether mit einem mittleren Molekulargewicht von 30 000 bis 60 000, insbesondere von 40 000 bis 55 000 eingesetzt.

Die Komponente B) ist in den erfindungsgemäßen Formmassen in Mengen von 5 bis 93,9, bevorzugt 20 bis 93,8 und insbesondere 30 bis 89 Gew.-% enthalten, bezogen auf das Gesamtgewicht der Komponenten A) bis D) sowie gegebenenfalls E).

Die Komponente B) ist ein vinylaromatisches Polymer, das vorzugsweise mit dem eingesetzten Polyphenylenether verträglich ist.

Das Molekulargewicht dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980).

Die Homopolymerisate können Gewichtsmittel des Molekulargewichts $M_w$ von 100 bis 300 000 aufweisen, die nach üblichen Methoden bestimmt werden können.

Als Comonomere zur Herstellung von Copolymerisaten kommen z.B. (Meth)acrylsäure, (Meth)-acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10 000 bis 300 000, die nach üblichen Methoden bestimmt werden können.

Bei der Komponente B) handelt es sich vorzugsweise um schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens

und/oder Isoprens mit Styrol und anderen Comonomeren, die eine Glastemperatur, bestimmt nach K.H. Illers und H. Breuer, Kolloidzeitschrift 190 (1), 16 bis 34 (1963), unter -20°C besitzen.

Es können auch Mischungen von schlagfest modifizierten und nichtmodifizierten vinylaromatischem Polymeren eingesetzt werden, wobei das Mischungsverhältnis beliebig ist.

Als Komponente C) enthalten die erfindungsgemäßen Formmassen in Mengen von 0,1 bis 20, vorzugsweise 0,2 bis 10 und insbesondere 1 bis 5 Gew.-% aromatische Sulfonamide der allgemeinen Formel I

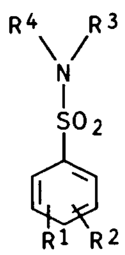

I

wobei

$R^1$, $R^2$ gleiche oder verschiedene Reste Wasserstoff oder eine $C_1$-$C_4$-Alkylgruppe

$R^3$, $R^4$ gleiche oder verschiedene Reste Wasserstoff oder eine $C_1$-$C_{10}$-Alkylgruppe oder eine cycloaliphatische Gruppe mit 5 bis 10 C-Atomen

bedeuten.

Bevorzugte gleiche oder verschiedene Reste $R^1$ und $R^2$ sind Wasserstoff oder eine Methyl- oder Ethylgruppe, wobei der Methylrest besonders bevorzugt ist. Bevorzugte Reste $R^3$ und $R^4$ sind unabhängig voneinander Wasserstoff, geradkettige sowie verzweigte Alkylreste, wobei der Methylrest sowie als cycloaliphatische Gruppe der Cyclohexylrest besonders bevorzugt sind.

Geeignete Verbindungen der allgemeinen Formel I sind Toluolsulfonamid, Benzolsulfonamid, N-Methylbenzolsulfonamid, o-Xylolsulfonamid, N,N-Dimethylbenzolsulfonamid oder deren Mischungen.

Die Komponente C) weist im allgemeinen einen Schmelzpunkt von 90°C oder höher auf.

Sulfonamide erhält man beispielsweise durch Umsetzung des entsprechenden Sulfonylchlorids mit wäßrigem Ammoniak. N-alkylsubstituierte Sulfonamide sind durch analoge Reaktion mit primären Aminen erhältlich.

Als Komponente D) enthalten die erfindungsgemäßen Formmassen mindestens eine phosphorhaltige Verbindung als Flammschutzmittel gegebenenfalls in Kombination mit mindestens einem Triazinderivat.

Bei der Komponente D) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganschen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid. Trinonylphosphinoxid, Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Beispiele sind Calciumhypophosphit und Magnesiumhypophosphit, daneben auch Doppelhypophosphite oder komplexe Hypophosphite, oder organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenylbis(3,5,5-trimethylhexyl)phosphat, Ethyldiphenylphosphat, 2-Ethylhexyldi(tolyl)phosphat, Diphenylhydrogenphosphat,Bis(2-ethylhexyl)-p-tolylphosphat, Tritolylphosphat, Bis(2-ethylhexyl)-phenylphosphat, Di(nonyl)-phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7.000, vorzugsweise im Bereich von 700 bis 2.000 liegen.

Der Phosphor besitzt hierbei die Oxidationsstufe -1.

Ferner können anorganische Koordinationspolymere von Aryl(Alkyl)-phosphinsäurenwie z.B. Poly-[natrium(I)-methylphenylphosphinat] eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A oder Tetramethylbisphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphinsäure)ester und Methylneopentylphosphat (Methanphosphonsäureneopentylester) sowie Mobil Antiblaze 19, wobei diese Verbindungen allein oder in beliebigen Mischungsverhältnissen zugesetzt werden können.

Die gemäß der Erfindung gegebenenfalls verwendbaren Triazinderivate sind im allgemeinen Melamin sowie dessen Reaktionsprodukte mit organischen oder anorganischen Säuren.

Bevorzugt sind Melamin (Formel I) und Melamincyanurat, wobei letzteres ein Reaktionsprodukt aus

vorzugsweise äquimolaren Mengen von Melamin und Cyanursäure bzw. Isocyanursäure (Formeln IIa und IIb) ist.

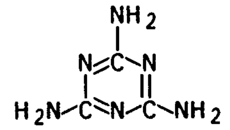

(I)

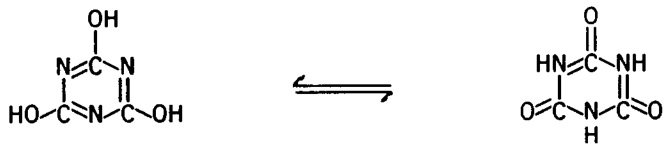

(IIa) Enolform

(IIb) Ketoform

Man erhält es z.B. durch Umsetzung von wäßrigen Lösungen der Ausgangsverbindungen bei 90 bis 100 °C. Das im Handel erhältliche Produkt ist ein weißes Pulver mit einer mittleren Korngröße $d_{50}$ von 69 µm.

Darüber hinaus sind Melaminoxalat, Melaminphosphat, Melaminborat oder Melaminstearat geeignet.

Es können auch Mischungen der o.g. Triazinderivate eingesetzt werden, wobei das Mischungsverhältnis beliebig ist.

Der Gehalt der Komponente D) in den erfindungsgemäßen Formmassen beträgt 1 bis 30, bevorzugt 1 bis 20 und insbesondere 5 bis 20 Gew.-%, bezogen auf die Komponenten A) bis D) sowie gegebenenfalls E).

Die Mischungsverhältnisse der phosphorhaltigen Verbindungen zu Triazinderivaten sind beliebig. Bevorzugte Mischungsverhältnisse betragen 15:1 bis 1:1, bevorzugt 10:1 bis 4:1.

Als Komponente E) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.%, bezogen auf das Gesamtgewicht der Komponente A) bis E).

Als Zusatzstoffe seien Schlagzähmodifier genannt, die in Mengen bis zu 20 Gew.-%, bevorzugt bis zu 15 Gew.-% enthalten sein können und welche verschieden von Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch statistische Segmente enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z.B. in Frage $TiO_2$ und Ruße.

Bei Verwendung von $TiO_2$ liegt die mittlere Teilchengröße im Bereich von 50 - 400 nm, insbesondere 150 - 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung

erhältlichen Thermalruße genannt.

Die Teilchengrößen liegen vorzugsweise im Bereich von 0,01 bis 0,1 µm und die Oberflächen im Bereich von $10^2$ bis $10^4$ $m^2/g$ (BET/ASTM D 3037) bei DBP-Absorptionen von $10^2$ bis $10^3$ ml/100 g (ASTM d 2414).

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320 °C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Die erfindungsgemäßen Formmassen eignen sich gut zur Herstellung von Formteilen aller Art, z.B. durch Spritzguß oder Extrusion. Sie können weiterhin dienen zur Herstellung von Folien und Halbzeug im Tiefzieh- oder Blasverfahren.

Die flammgeschützten erfindungsgemäßen Formmassen zeichnen sich durch eine ausgezeichnete Fließfähigkeit, hohe Wärmeformbeständigkeit, gute mechanische Eigenschaften und hervorragende Brandschutzeigenschaften aus.

Beispiele

Für die Beispiele und Vergleichsbeispiele wurden folgende Komponenten eingesetzt:

Komponente A

A(1): Poly-2,6-dimethyl-1,4-phenylenether mit einer mittleren Molmasse $\overline{M}_w$ von 40000.
A(2): Poly-2,6-dimethyl-1,4-phenylenether mit einer mittleren Molmasse $\overline{M}_w$ von 25000.

Komponente B

Schlagfestes Polystyrol mit 8 Gew.-% Polybutadien und mittlerer Teilchengröße der Weichkomponente von 2,8 µm. Die VZ der Hartmatrix beträgt 70 ml/g (0,5 %ig in Toluol bei 23 °C).

Komponente C

C(1): Benzolsulfonamid (> 97 %), Handelsprodukt der Fa. Merck/Schuchardt
C(2): p-Toluolsulfonamid (98 %), Handelsprodukt der Fa. Merck/Schuchardt.

Komponente D

D(1): Mischung aus Triphenylphosphinoxid, Triphenylphosphat und Melamin im Verhältnis 5,5:3,8:1
D(2): Mischung aus Triphenylphosphinoxid und Melamin im Verhältnis 5:1
D(3): Mischung aus Triphenylphosphinoxid und Melamin im Verhältnis 7,5:1

Außerdem wurde Stearylstearat (E(1)) und Calciumstearat (E(2)) verwendet.

Herstellung der Formmassen

Die Komponenten A) bis D) sowie gegebenenfalls E) wurden auf einem Zweischneckenextruder bei einer Temperatur von 280 °C konfektioniert, verstrangt, gekühlt und granuliert.

Aus dem getrockneten Granualt wurden bei 280 °C Normprüfkörper auf einer Spritzgußmaschine hergestellt.

Zur Beurteilung des Eigenschaftsbildes der Mischungen wurden Schmelzviskosität, Vicat-Temperatur und Durchstoßarbeit gemessen:

MVI bei 200 °C mit 5 kg nach DIN 53 735,
Vicattemperatur VST/B nach DIN 53 460
Durchstoßarbeit (Gesamtarbeit $W_{ges}$) bei 23 °C nach DIN 53 443.

Die Flammschutzprüfung erfolgte im vertikalen Brandtest nach UL-94 an 3,2 mm Teststäben nach den

Vorschriften der Underwriter Laboratories zwecks Einordnung in eine der Branklassen UL-94 V0, UL-94 V1 oder UL-94 V2. Bei Nichtbestehen der Brandprüfung nach UL-94 wird die Probe unter HB eingestuft.

Zusammensetzung und Eigenschaften der erfindungsgemäßen und nicht erfindungsgemäßen Formmassen

Tabelle

| Beispiel<br>Vergleichsversuch | | V1 | 1 | 2 | V2 | V3 | V4 |
|---|---|---|---|---|---|---|---|
| A | Gew.-% | A(1) 32 | A(1) 32 | A(1) 32 | A(1) 32 | A(1) 32 | A(1) 32 |
| B | Gew.-% | 52,4 | 49,4 | 49,4 | 49,4 | 49,4 | 58,4 |
| C Komponente | Gew.-% | | C(1) 3 | C(2) 3 | - | - | - |
| D Komponente | Gew.-% | D(1) 15,6 | D(1) 15,6 | D(1) 15,6 | D(1) 15,6 | D(1) 15,6 | D(2) 9,6 |
| E Komponente | Gew.-% | | | | E(1),3 | E(2) 3 | |
| MVI (5/200) | [ml/10 min] | 1,6 | 2,4 | 4,1 | 4,4 | 3 | 0,8 |
| Vicat | [°C] | 88 | 87 | 86 | 78 | 79 | 105 |
| Durchstoßarbeit | [Nm] | 6 | 7 | 9 | 9 | 6 | 11 |
| Brandtest UL 94, 3,2 mm: | | | | | | | |
| mittlere Brandzeit bei 10 Beflammungen | [s] | 4,6 | 4,1 | 3,5 | 5,2 | 5,1 | 7,3 |
| Abtropfen der Brandstäbe | | nein | nein | nein | nein | nein | nein |
| Brandklasse | | V0 | V0 | V0 | V1 | V1 | V1 |

Tabelle

| Beispiel | | 3 | 4 | | 5 | | 6 |
|---|---|---|---|---|---|---|---|
| Vergleichsversuch | | | | V5 | | V6 | |
| A | Gew.-% | A(1) 32 | A(1) 32 | A(2) 15 | A(2) 15 | A(2) 12 | A(2) 12 |
| B | Gew.-% | 50,4 | 50,4 | 75,4 | 69,4 | 74,4 | 68,4 |
| C Komponente | Gew.-% | C(1) 8 | C(2) 8 | | C(1) 6 | - | C(1) 6 |
| D Komponente | Gew.-% | D(2) 9,6 | D(2) 9,6 | D(2) 9,6 | D(2) 9,6 | D(3) 13,6 | D(3)13,6 |
| MVI (5/200) | [ml/10 min] | 3,9 | 2,2 | 4,8 | 12,3 | 12,2 | 26,2 |
| Vicat | [°C] | 104 | 101 | 90 | 88 | 79 | 79 |
| Durchstoßarbeit | [Nm] | 21 | 15 | 6 | 10 | 8 | 8 |
| Brandtest UL 94, 32, mm: | | | | | | | |
| mittlere Brandzeit bei 10 Beflammungen | [s] | 6,3 | 4,7 | > 30 | 24,2 | 22,8* | 15,4 |
| Abtropfen der Brandstäbe | | nein | nein | ja | ja | ja | ja |
| Brandklasse | | V1 | V0 | HB | V2 | HB | V2 |

* bei einem Brandstab Überschreitung der zum Erreichen der Klassifizierung V2 maximal zulässigen Brenndauer von 30 Sekunden.

Aus den Beispielen 1 und 2 der Tabelle wird ersichtlich, daß durch den Zusatz der aromatischen Sulfonamide C(1) und C(2) der Schmelzflußindex zunimmt und die Vicat-Temperatur nur wenig abnimmt. Gleichzeitig ist die mittlere Brandzeit gegenüber dem Vergleichsversuch V1 geringer geworden, d.h. die aromatischen Sulfonamide C(1) und C(2) zeigen Brandschutzwirkung, und die multiaxiale Zähigkeit, ausgedrückt durch die Durchstoßarbeit, ist vergrößert worden. Herkömmliche Schmiermittel (Vergleichsversuche V2 und V3) bewirken dagegen ein Absinken der Vicat-Temperatur unter 80 °C und verlängern die

Brandzeiten der Polymermischungen, sodaß die Klassifizierung UL-94 V0 nicht mehr erreicht wird.

In den Polymermischungen der Beispiele 3 und 4, die 8 % aromatisches Sulfonamid enthalten, ist der Vicat-Wert trotz des hohen Gehalts an Fließverbesserer gegenüber dem Vergleichsversuch V4 nur um wenige Grad zurückgegangen. Durchstoßarbeit und Brandschutzwirkung haben sich verbessert.

Die Beispiele 5 und 6 zeigen, daß in Polymermischungen bestimmter Zusammensetzungen bei gleichem Gehalt an Polyphenylenether und phosphorhaltigem Flammschutzmittel der Einsatz aromatischer Sulfonamide eine Einstufung in eine der Brandklassen nach UL-94 bewirkt. Auch in diesen Beispielen wird die Fließfähigkeit mehr als verdoppelt, ohne daß die Vicat-Temperatur erheblich absinkt.

## Patentansprüche

**1.** Flammgeschützte thermoplastische Formmassen, enthaltend
A) 5 bis 93,9 Gew.-% eines Polyphenylenethers
B) 5 bis 93,9 Gew.-% eines vinylaromatischen Polymeren
C) 0,1 bis 20 Gew.-% eines aromatischen Sulfonamids
D) 1 bis 30 Gew.-% eines phosphorhaltige Flammschutzmittels
und
E) 0 bis 60 Gew.-% sonstiger Zusatzstoffe in wirksamen Mengen.

**2.** Flammgeschützte thermoplastische Formmassen nach Anspruch 1, enthaltend
A) 5 bis 50 Gew.-%
B) 20 bis 93,8 Gew.-%
C) 0,2 bis 10 Gew.-%
D) 1 bis 20 Gew.-%

**3.** Flammgeschützte thermoplastische Formmassen nach den Ansprüchen 1 oder 2, enthaltend als Komponente C) aromatische Sulfonamide der allgemeinen Formel I

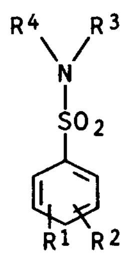

I

wobei
$R^1$, $R^2$ gleiche oder verschiedene Reste Wasserstoff oder eine $C_1$-$C_4$-Alkylgruppe
$R^3$, $R^4$ gleiche oder verschiedene Reste Wasserstoff oder eine $C_1$-$C_{10}$-Alkylgruppe oder eine cycloaliphatische Gruppe mit 5 bis 10 C-Atomen
bedeuten.

**4.** Flammgeschützte thermoplastische Formmassen nach den Ansprüchen 1 bis 3, enthaltend aromatische Sulfonamide C) der allgemeinen Formel I, wobei
$R^1$, $R^2$ gleiche oder verschiedene Reste Wasserstoff oder eine Methylgruppe
$R^3$, $R^4$ gleiche oder verschiedene Reste Wasserstoff oder eine Methylgruppe oder eine Cyclohexylgruppe
bedeuten.

**5.** Flammgeschützte thermoplastische Formmassen nach den Ansprüchen 1 bis 4, enthaltend als aromatische Sulfonamide C) Toluolsulfonamid, Benzolsulfonamid, N-Methylbenzolsulfonamid, O-Xylolsulfonamid, N,N-Dimethylbenzolsulfonamid oder deren Mischungen.

**6.** Verwendung der flammgeschützten thermoplastischen Formmassen gemäß den Ansprüchen 1 bis 5 zur Herstellung von Folien, Fasern und Formkörpern.

7. Formkörper, erhältlich aus flammgeschützten thermoplastischen Formmassen gemäß den Ansprüchen 1 bis 5.

Europäisches Patentamt

# EUROPÄISCHER RECHERCHENBERICHT

Nummer der Anmeldung

EP 91 12 2344

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 337 179 (GENERAL ELECTRIC)<br>* Seite 3, Zeile 13 - Zeile 15; Anspruch 1 *<br>--- | 1-7 | C08L71/12<br>C08L25/02<br>C08L51/04<br>C08K5/00<br>//(C08K5/00,5:43<br>,5:49) |
| A | EP-A-0 192 154 (BASF)<br>--- | | |
| A | FR-A-2 212 382 (HARWICKE CHEMICAL CY.)<br>--- | | |
| A | WORLD PATENTS INDEX LATEST<br>Derwent Publications Ltd., London, GB;<br>AN 86-033384<br>& JP-A-60 255 851 (MITSUBISHI)<br>* Zusammenfassung *<br>--- | | |
| A | DE-A-3 138 505 (BASF)<br>----- | | |
| | | | RECHERCHIERTE SACHGEBIETE (Int. Cl.5) |
| | | | C08L<br>C08K |

Der vorliegende Recherchenbericht wurde für alle Patentansprüche erstellt

| Recherchenort | Abschlußdatum der Recherche | Prüfer |
|---|---|---|
| DEN HAAG | 30 MAERZ 1992 | MEULEMANS R.A.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument